# FASCICULE DE BREVET EUROPEEN

(11) **EP 2 134 625 B1**
(45) Date de publication et mention de la délivrance du brevet: **29.12.2010**
(21) Numéro de dépôt: 08761810.4
(22) Date de dépôt: 29.01.2008
(51) Int. Cl.: B65D 85/76, B65D 81/24, B65D 55/08, A23C 19/068

(54) **EMBALLAGE DE TYPE SOCLE ET CLOCHE POUR PRODUIT DE TYPE FROMAGER**
VERPACKUNG MIT BODEN UND GLOCKE FÜR KÄSEPRODUKT
BASE-AND-BELL TYPE PACKAGING FOR CHEESE-TYPE PRODUCT

(30) Priorité: 17.04.2007 FR 0702759
(43) Date de publication de la demande: 23.12.2009
(73) Titulaire: Groupe Lactalis, 53000 Laval (FR)
(72) Inventeur: GEORGEAULT, Pierre, 35110 Cesson Sevigne (FR); BAJAS, Chrystelle, F-53260 Entrammes (FR)
(74) Mandataire: Dupuis-Latour, Dominique
(86) Numéro de dépôt international: PCT/FR2008/000099
(87) Numéro de publication internationale: WO 2008/129143

(56) Documents cités:
- EP-A- 0 299 845
- EP-A- 1 767 458
- EP-A- 1 847 480
- FR-A- 2 773 137
- FR-A- 2 809 380
- FR-A- 2 866 638

## Description

L'invention concerne un article alimentaire, notamment le conditionnement des produits de type fromager dans des emballages fermés.

Elle concerne plus particulièrement le conditionnement des fromages à pâte molle et à croûte naturelle, fleurie ou non, tels que camembert, brie, coulommiers, chaource, palet de chèvre, etc.

Traditionnellement, ces produits sont présentés sous forme de fromages entiers entièrement enveloppés dans un "habillage fromager" ou "complexe d'emballage", c'est-à-dire dans une feuille souple en contact avec le fromage, le tout étant ensuite placé dans une boîte en carton ou en bois telle qu'une boîte à camembert, donnant à l'ensemble une présentation traditionnelle, d'apparence artisanale.

Cet emballage classique, qui a peu évolué depuis sa création, est cependant source de freins à la consommation.

Les consommateurs formulent en effet plusieurs reproches à l'égard de ce type de conditionnement, notamment :
- la difficulté à conserver les caractéristiques organoleptiques que le fromage avait au moment de l'achat,
- la difficulté pour choisir des produits à un stade d'affinage précis (le fromage est emballé donc n'est pas visible),
- des odeurs parfois gênantes,
- et une praticité à améliorer, compte tenu du double emballage (habillage souple plus boîte), des difficultés à refermer le tout et des risques de souillure une fois le fromage entamé.

Il a été proposé de supprimer la feuille d'habillage enveloppant le fromage, et de placer celui-ci nu dans un récipient fermé creux de type ramequin ou barquette, fermé en partie supérieure par une membrane "respirante", c'est-à-dire formée d'un film à perméabilité contrôlée apte à réguler les échanges gazeux, notamment en oxygène et en gaz carbonique, entre le volume interne de l'emballage et l'atmosphère extérieure ambiante.

De tels conditionnements sont par exemple décrits dans les documents EP-A-1 277 445 (BSA), EP-A-1 184 298 (Fromageries Bel) ou encore FR-A-2 866 638 (L'Étoile du Vercors).

La barquette est cependant un type d'emballage assez ordinaire, peu employé pour des produits de haut de gamme, à moins de la présenter sous forme d'un ramequin en grès, coûteux.

Dans une variante, il a été proposé, par exemple d'après le EP-A-1767458 (Groupe lactalis), de remplacer la barquette par un socle supportant le produit, fermé par une cloche de protection qui vient recouvrir le tout pour assurer, avant l'achat et entre deux utilisations, la protection du fromage posé sur le socle.

Le EP-A-1 184 298 (Fromageries Bel) précité décrit un tel type de conditionnement, où la cloche est réalisée dans un matériau imperméable aux gaz et fermée en partie inférieure par une membrane respirante définissant un volume clos, Le produit, qui est un fromage à pâte molle et à croûte fleurie, est disposé à l'intérieur de ce volume et le tout est posé sur le plateau. La membrane respirante, disposée en partie inférieure et interposée entre le fromage et le socle, est donc en contact avec la surface du fromage. A la première utilisation, la membrane est arrachée, puis le fromage est disposé sur la surface du plateau pour être consommé.

Le FR-A-2 804 413 (Société anonyme des caves et des producteurs réunis de Roquefort) décrit un autre type de conditionnement, où le fromage est, au contraire du cas précédent, placé directement sur un plateau support coopérant avec une coque de protection amovible. Le conditionnement ne comprend pas de membrane à perméabilité contrôlée, mais il incorpore un élément formant buvard destiné à absorber l'exsudat produit par le fromage en cours de stockage. Ce conditionnement, qui cherche à limiter au maximum le volume d'air autour du fromage pendant son stockage et après sa première utilisation, convient mieux à des fromages du type roquefort qu'à des fromages à croûte naturelle, notamment des fromages à croûte fleurie, qui présentent une activité biologique et respiratoire beaucoup plus importante et dont les propriétés gustatives et d'aspect sont susceptibles d'évoluer rapidement, et de façon négative, si certaines conditions de respect du métabolisme ne sont pas vérifiées.

Le EPA-O 299 845 (Bongrain) décrit un autre exemple de conditionnement où un fromage à croûte fleurie est présenté sur un socle fermé par un couvercle. Le couvercle comprend une fenêtre latérale fermée par une membrane à perméabilité contrôlée permettant au fromage de poursuivre son affinage même une fois conditionnement refermé. Le fromage n'y est pas placé directement sur le socle, mais avec interposition d'une plaque d'interface destinée, d'une part, à assurer une ventilation de la sous-face du fromage pour permettre un développement normal de la flore à cet endroit, comme sur les autres faces et, d'autre part, à absorber une partie importante de l'humidité perdue par le fromage en début de stockage après fermeture de la boîte (c'est-à-dire lorsque le fromage n'est pas encore affiné), pour la restituer ensuite dans le volume intérieur du conditionnement.

Malgré la très grande diversité de ces propositions, il existe toujours un certain nombre de problèmes non résolus, qui ont jusqu'à présent limité le développement de ce type de conditionnement des fromages, et restreint son application à certaines spécialités seulement.

Le *premier problème* résulte de la condensation à l'intérieur de la cloche, surtout pour les produits les plus humides. En effet, les variations de température dans les linéaires sont permanentes ; les rayons réfrigérés ouverts entraînent une génération de froid discontinu, ce qui provoque des phénomènes de condensation à l'intérieur des emballages. Cette condensation, qui apparaît difficile à éliminer, crée un risque d'humidification du produit par ruissellement, susceptible d'entraîner des défauts d'aspect du produit.

Le *deuxième problème* est lié aux variations dimensionnelles du produit qui évolue en cours de stockage, variations qui peuvent être importantes notamment pour les produits les plus souples (camembert, ...). En effet, la texture molle du fromage génère un affaissement et une augmentation de diamètre : le produit vient alors progressivement au contact de la cloche sur le côté, et l'on observe alors à cet endroit un phénomène d'adhésion suffisamment important pour supprimer tous les bénéfices dé praticité de l'emballage, le fromage restant collé et bloqué à l'intérieur de la cloche. Le remède ne consiste pas à prévoir une cloche suffisamment large, car alors le fromage aura tendance à occuper l'espace disponible, en se déformant de manière peu attrayante en prenant une forme très éloignée, par exemple, de celle d'un camembert emballé dans sa boîte.

Le *troisième problème* tient au fait que, notamment pour les fromages à croûte fleurie, lors de l'affinage et du stockage la fleur (association de Pe*nicillium* et de *Geotrichum)* se développe et peut dans certains cas présenter un aspect "cotonneux" inhabituel pour un consommateur. Même si ce phénomène est neutre sur le plan gustatif, il est généralement considéré comme un défaut par le consommateur, qui se détournera de ce produit.

Les trois problèmes que l'on vient d'exposer se posent tout particulièrement dans le cas des fromages à pâte molle et croûte naturelle, avec plus ou moins d'acuité relative selon le type de pâte (humidité, souplesse....) et de fleur (*Penicillium* et *Geotrichum* en particulier). Une première approche de solution est proposée par le EP-A- 1 247 480 (Groupe Lactalis), en enveloppant le produit fromager dans une coiffe souple en matériau respirant.

Pour résoudre les problèmes que l'on vient d'exposer, l'invention propose de conditionner le fromage sous la forme d'un article alimentaire du type général connu présentant les caractéristiques du préambule de la revendication 1 , divulgué par exemple par le EP-A-1847480 précité, comprenant une masse d'un produit de type fromager et un emballage fermé, logeant ce produit, comprenant un socle plat rigide supportant le produit et une cloche externe formant avec le socle un volume fermé contenant le produit, cloche et socle comprennent des moyens de fermeture coopérants.

L'emballage comprend en outre une coiffe en un matériau souple et perméable aux gaz et à la vapeur d'eau. Un tel matériau est par exemple décrit par le Fr-A-2 809 380. Cette coiffe recouvre au moins partiellement la surface libre du produit dans l'intervalle compris entre cette dernière et la surface intérieure de la cloche, et elle est en outre apte à réguler les échanges gazeux entre le produit fromager et son atmosphère environnante.

La coiffe en matériau souple assure par elle-même l'ensemble des fonctions suivantes :
- réguler les échanges gazeux entre le produit fromager et son atmosphère environnante,
- isoler le produit de la condensation quand il n'est pas possible de la supprimer,
- permettre de conditionner de manière ajustée le produit dans son emballage, avec peu ou pas d'espace entre le produit et la cloche, notamment sur les côtés, en évitant que le produit légèrement affaissé ne vienne coller à la cloche,
- dans le cas d'un fromage à croûte fleurie, plaquer la fleur du fromage lors de la mise en boîte, pour éviter un aspect cotonneux déplaisant - pour le consommateur.

De façon caractéristique de l'invention, .

Le produit de type fromager est avantageusement un fromage à croûte naturelle fleurie, morgée ou mixte avec présence de levures, moisissures, cultures de micro-organismes ou bactéries communément présents en fromagerie, ce fromage étant un fromage du groupe comprenant : les pâtes ferme, semi-dure, pressée ou non, cuite ou non avec croûte naturelle ; les pâtes persillées à croûte fleurie, margée, ou non ; et les pâtes molles à croûte naturelle fleurie et/ou morgée.

De préférence, ce produit est directement supporté par la face supérieure du socle.

La coiffe recouvre de préférence toute l'étendue de la face supérieure du produit, et/ou la surface latérale périphérique du produit sur la hauteur de celui-ci située en vis-à-vis de la cloche. Elle peut comporter une languette de préhension apte à faciliter son enlèvement et son retrait au moment de la première ouverture.

Les dimensions transversales de la cloche sont avantageusement choisies, en fonction des dimensions correspondantes du produit et de la déformabilité de ce dernier, de manière à ne laisser subsister que peu ou pas d'espace libre entre produit et cloche dans la région périphérique latérale de l'emballage.

Dans le cas d'un produit fromager du type à pâte molle et croûte fleurie, la configuration intérieure de la face supérieure de la cloche est de préférence choisie de manière à plaquer la coiffe contre la face supérieure du produit fromager lorsque la cloche est mise en place sur le socle. Avantageusement, l'emballage comprend en outre un manchon extérieur, notamment un manchon thermorétractable, disposé à cheval sur la cloche et sur le socle et enserrant ensemble ces deux éléments, ce manchon étant en un matériau déchirable empêchant toute ouverture de l'emballage sans endommagement du manchon.

Enfin, le socle peut éventuellement comprendre des nervures saillantes vers l'intérieur, formées sur la région en contact avec la sous-face du produit.

l'emballage comprend au moins une ouverture de ventilation propre à mettre librement en communication le volume gazeux intérieur de l'emballage avec l'atmosphère extérieure ambiante.

Cette (ces) ouverture(s) de ventilation est (sont) formée(s) à l'interface entre socle et cloche, par exemple par un ou des passages périphériques subsistant du fait de parties localement élargies du socle et/ou de la cloche dans la zone d'emboîtement entre socle et cloche, régulièrement répartis dans la zoné d'emboîtement entre socle et cloche et séparés par des régions d'encliquetage de la cloche sur le socle.

On va maintenant décrire un exemple de réalisation de l'emballage selon l'invention, en référence aux dessins annexés sur lesquels les mêmes références numériques désignent sur les figures des éléments identiques.
La figure 1 est une vue en coupe du fromage conditionné dans son emballage, montrant les différents éléments constitutifs de ce dernier
La figure 2 est une vue en perspective de la cloche externe de fermeture, considérée isolément, de l'emballage de la figure 1.
La Figure 3 est une vue en perspective du socle, considéré isolément, de l'emballage selon un mode de réalisation de l'invention.
Les Figures 4 et 5 sont des détails du rebord périphérique du socle de la Figure 3 vus en coupe selon IV-IV et V-V, respectivement.
La Figure 6 est une vue perspective partielle du détail de la Figure 4.

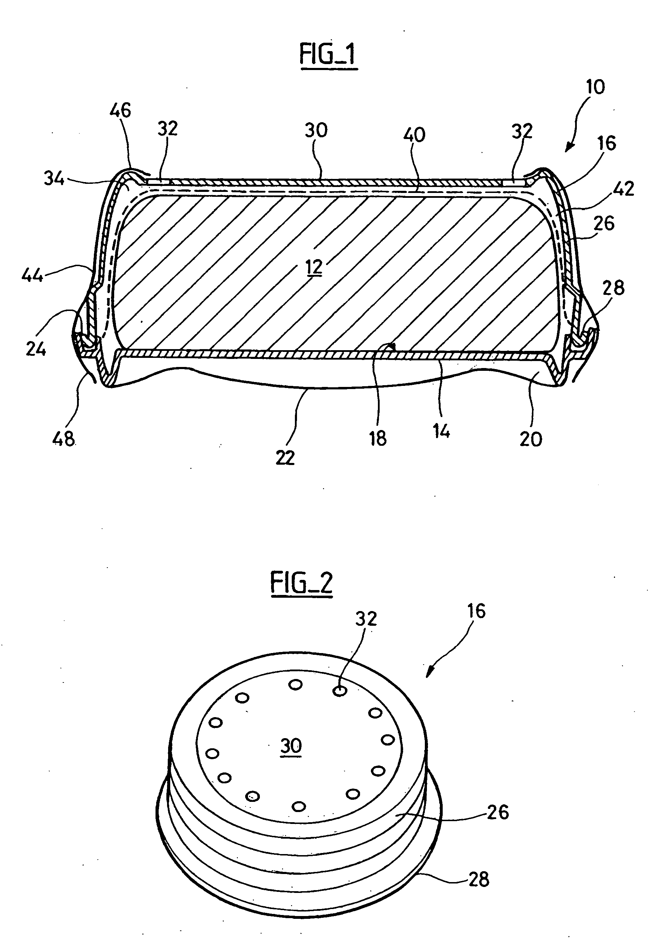

Sur la figure 1, la référence 10 désigne l'article tel qu'il se présente avant la première utilisation par le consommateur, avec un fromage 12 reposant sur un socle plat 14 fermé par une cloche amovible 16.

Dans la suite, on évoquera un article de forme cylindrique aplatie, mais cette forme n'est aucunement limitative et d'autres emballages, correspondant à d'autres formes de fromages, peuvent aussi bien être envisagées, par exemple des formes carrées, rectangulaires, tronconiques, en tronc de pyramide, triangulaire ou en forme de secteur circulaire (forme d'une "pointe de brie"), etc.

L'emballage de l'invention se révèle particulièrement approprié au conditionnement des fromages à croûte naturelle fleurie, morgée ou mixte, avec présence des levures, moisissures, cultures de micro-organismes ou bactéries communément présents en fromagerie.

Parmi ces fromages on trouve notamment :
- les pâtes ferme, semi-dure, pressée ou non, cuite ou non avec croûte naturelle,
- les pâtes persillées à croûte fleurie, morgée, ou non,
- les pâtes molles à croûte naturelle fleurie et/ou morgée (camembert, coulommiers, brie, chaource, pont-l'évêque, livarot, ... ainsi que les diverses spécialités à croûte fleurie de ce type).

Ces exemples avantageux ne sont toutefois pas limitatifs, et le terme de "produit de type fromager" doit être entendu dans son acception la plus large. L'emballage de l'invention est notamment applicable au conditionnement non seulement de fromages proprement dits, mais aussi de préparations alimentaires, en particulier celle possédant une croûte fleurie, ainsi que de préparations de type fromager comprenant au moins un ingrédient non laitier, par exemple des préparations alimentaires comparables à des fromages, dans lesquelles tout ou partie de la matière grasse animale a été remplacée par de la matière grasse végétale.

Le socle 14 est de préférence en matière plastique, par exemple injecté ou thermoformé, mais d'autres matériaux peuvent être envisagés, notamment des associations de bois, carton et/ou matière plastique. Le fromage est posé directement sur la face supérieure, plane 18 du socle 14. Cette surface 18 peut être éventuellement pourvue de nervures ou autres reliefs permettant de limiter l'adhésion du fromage sur le socle et d'assurer une ventilation de la sous-face du fromage. La face inférieure 20 du socle 14 peut être conformée de manière à présenter des nervures ou des pieds 22 permettant de surélever le socle et également de laisser subsister un lit d'air entre deux articles lorsque ceux-ci sont empilés sur des rayons. Enfin, le socle 14 comporte en périphérie un rebord en forme de gouttière 24 recevant de manière emboîtante la cloche lors de la fermeture de l'emballage.

La cloche 16 est en matière plastique, éventuellement transparente, par exemple en polypropylène, et peut être injectée ou thermoformée. D'autres matériaux peuvent toutefois être envisagés, notamment des associations de bois, carton et/ou matière plastique. La surface périphérique latérale 26 de la cloche 16 se termine par un bord libre 28 conformé de manière à venir s'emboîter dans la gouttière 24 du socle. Les hauteurs relatives du socle et de la cloche sont choisies de manière que la cloche soit notablement plus haute que le socle, avec par exemple des hauteurs relatives dans un ratio de l'ordre de 3:1 ou 4:1, de manière qu'une fois la cloche enlevée le fromage puisse être aisément saisi, ou bien découpé directement sur le socle.

Dans le mode de réalisation illustré figures 1 et 2, la partie supérieure 30 de la cloche 16 est pleine, à l'exception d'une pluralité d'ouvertures 32, par exemple des ouvertures circulaires régulièrement réparties à la périphérie de la face supérieure 30. Le diamètre de ces ouvertures 30 est choisi de manière qu'elles puisse jouer un rôle d'orifices de ventilation, c'est-à-dire permettre de maintenir dans le volume intérieur 34 de la cloche (c'est-à-dire dans l'atmosphère environnant le fromage) une teneur en oxygène et en gaz carbonique proche de celle de l'air ambiant (20,6 % d'oxygène et 0 % de gaz carbonique). Sur sa face supérieure et sur ses côtés le fromage 12 est entouré d'une coiffe 40.

Cette coiffe est réalisée en un matériau souple, perméable aux gaz impliqués dans le métabolisme du fromage (oxygène, gaz carbonique, vapeur d'eau, ..), par exemple un matériau non-tissé, enduit ou non, dont les dimensions permettent de recouvrir le dessus et les côtés du fromage. Cette coiffe peut être pourvue d'une languette permettant de l'enlever plus aisément au moment de la première ouverture ; par ailleurs, si elle est suffisamment fine pour ne pas provoquer de rupture d'étanchéité, la coiffe peut déborder du socle : ce cas se présente notamment lorsque l'on recouvre un fromage rond avec une coiffe carrée, les parties débordantes (les coins du carré) étant alors pincées entre le socle et la cloche au moment de la fermeture de l'emballage.

Comme on l'a indiqué plus haut, la coiffe assure un rôle multiple :
- isoler le produit de la condensation, les gouttes de condensation ne pouvant pas entrer en contact direct avec le produit,
- limiter la déformation du produit en permettant de le conditionner de manière ajustée (c'est-à-dire avec peu ou pas d'espace latéral 42 subsistant entre le fromage et la cloche) et simultanément de permettre une meilleure ouverture en évitant que le fromage ne colle à la cloche,
- plaquer la fleur du fromage pour éviter la repousse lors du stockage,
- réguler les échanges gazeux de l'oxygène et du gaz carbonique entre l'atmosphère interne de l'emballage et le fromage.

On peut par exemple utiliser pour la coiffe un complexe présentant une perméabilité à la vapeur d'eau, formé des couches successives suivantes : impression / matière plastique spéciale (perméable à la vapeur d'eau) 14 g/m² / matériau non-tissé 14 g/m² / enduction hydrophobe 3 g/m².

Avantageusement, une fois le produit placé dans l'emballage et la cloche refermée sur le socle, socle et cloche sont solidarisés entre eux par ajout d'un manchon rétractable 44 faisant office de témoin d'effraction et pouvant également servir de support d'impression de textes et de graphismes pour l'information du consommateur et l'identification du produit. Ce manchon s'étend en partie supérieure 46 en direction de la face supérieure de la cloche 16. Il s'étend en partie inférieure 48 de manière à venir enserrer le socle 14, sous la gouttière périphérique 24. Ce manchon sera arraché par le consommateur à la première utilisation, pour accéder à la cloche 16 et déboîter celle-ci du socle 14, présentant ainsi le fromage 12 sur son socle, après retrait de la coiffe 40.

D'autres moyens de solidarisation de la cloche au socle peuvent être envisagés, par exemple une étiquette adhésive, un fourreau carton, ou tout autre moyen approprié en lui-même connu.

Diverses variantes peuvent être apportées au mode de réalisation que l'on vient de décrire.

En particulier, sur les Figures 1 et 2 on a illustré en 32 des ouvertures formant orifices de ventilation qui sont formées sur la face supérieure de la cloche 16, en périphérie de celle-ci. Le rôle de ces ouvertures est de faire communiquer l'atmosphère environnant le fromage (c'est-à-dire l'atmosphère régnant dans le volume intérieur 34 de la cloche) avec l'atmosphère extérieure. Les orifices de ventilation peuvent toutefois, en jouant le même rôle, être disposés à d'autres endroits sur la cloche (par exemple sur la paroi latérale de celle-ci), et/ou être ménagés dans le socle 14, par exemple à la périphérie de ce dernier, dans une région où le fromage ne vient pas en contact avec la face plane 18 du socle.

Pour des produits fromagers à faible métabolisme, il est même possible de se dispenser de ces orifices de ventilation, la cloche et le socle étant alors tous deux dépourvus de tels orifices. Dans ce dernier cas, les échanges gazeux ont alors lieu uniquement entre le produit fromager et son atmosphère environnante (le volume intérieur 34 de l'emballage), au travers de la coiffe 40.

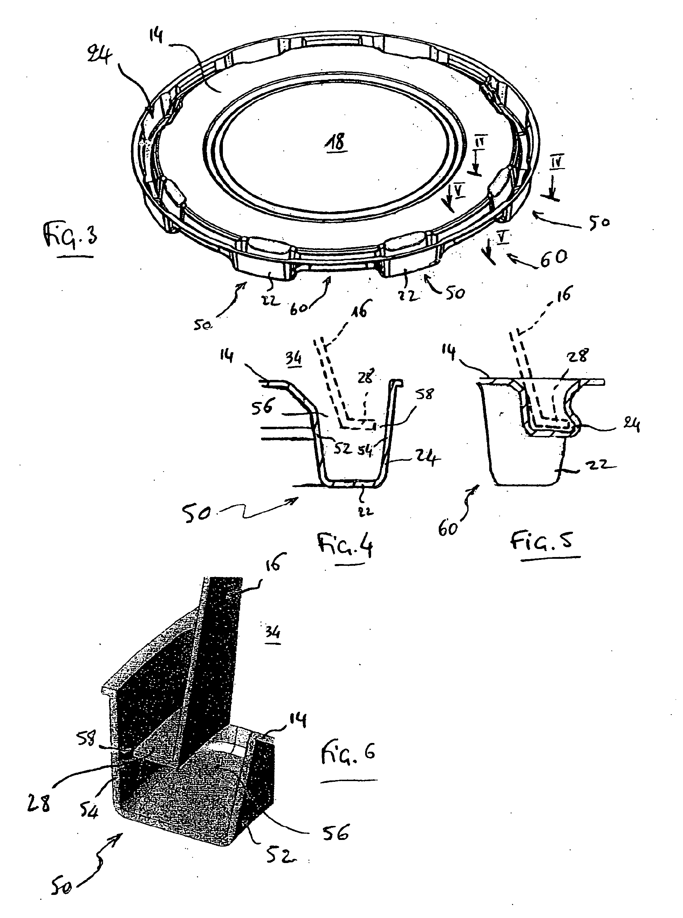

Sur les Figures 3 à 6, on a illustré un mode de réalisation selon l'invention, dans lequel l'emballage est pourvu d'orifices de ventilation, permettant la mise en communication du volume intérieur 34 de l'emballage avec l'atmosphère extérieure, et dans lequel ces orifices sont ménagés au niveau de l'interface entre socle et cloche, au niveau de la gouttière périphérique 24. Cette configuration évite d'avoir à réaliser des ouvertures dans une paroi de la cloche et/ou du socle.

Plus précisément, comme illustré sur la Figure 3 et sur les détails des Figures 4 à 6, le socle 18 est pourvu à sa périphérie de régions localement élargies 50. Plus précisément, dans ces régions 50 les parois latérales intérieure 52 et extérieure 54 de la gouttière 24 sont configurées de manière à définir entre elles, en direction radiale (horizontale avec les conventions de la figure), un intervalle plus large que le bord libre 28 de la cloche 16. De cette manière, des passages respectifs 56 et 58 sont ménagés entre ce bord libre 28 et les parois 52 et 54 de la gouttière 24. Pour que ces passages 56 et 58 puissent être mis en communication, la gouttière 24 présente en direction axiale (verticale avec les conventions de la figure) une profondeur suffisante pour ne pas venir en contact avec le bord libre 28 de la cloche 16. Le fond de cette gouttière 24 peut par ailleurs constituer le pied 22 décrit plus haut à propos du premier mode de réalisation, pour surélever la face support 18 du socle.

Cette configuration permet ainsi de mettre en communication le volume interne 34 de l'emballage avec l'atmosphère extérieure, de manière localisée à l'endroit des parties élargies 50. Ces différentes parties élargies 50 sont séparées par des régions 60 où le bord libre 28 de la cloche 16 vient s'encliqueter au fond de la gouttière 24 (Figure 5), de la même manière que dans le mode de réalisation des figures 1 et 2.

On notera que, dans le mode de réalisation illustré sur les figures 3 à 6, les parties élargies 50 ont été formées sur le socle, avec la cloche présentant un bord libre périphérique uniforme. En variante ou en complément, il serait également possible de rendre non uniforme ce bord libre, de manière à y ménager, toujours à l'interface entre socle et cloche, les passages de mise en communication du volume intérieur 34 de l'emballage avec l'atmosphère extérieure.

## Revendications

1. Un article alimentaire (10), comprenant :
- une masse d'un produit de type fromager (12), et
- un emballage fermé logeant ce produit, comprenant :
• un socle plat rigide (14) supportant le produit, et
• une cloche externe (16) formant avec le socle un volume fermé contenant le produit, cloche et socle comprenant des moyens de fermeture coopérants (24, 28) ; et
- une coiffe (40) en un matériau souple et perméable aux gaz et à la vapeur d'eau,
cette coiffe recouvrant au moins partiellement la surface libre du produit dans l'intervalle compris entre cette dernière et la surface intérieure de la cloche,
cette coiffe étant en outre apte à réguler les échanges gazeux entre le produit fromager et son atmosphère environnante,
**caractérisé en ce que** l'emballage comprend en outre au moins une ouverture de ventilation (56,58), formée(s) à l'interface entre socle (14) et cloche (16) et propre(s) à mettre librement en communication le volume gazeux intérieur de l'emballage avec l'atmosphère extérieure ambiante.

2. L'article de la revendication 1, dans lequel la (les) ouverture(s) de ventilation est (sont) formée(s) par un passage périphérique (56, 58) subsistant du fait de parties localement élargies (50) du socle et/ou de la cloche dans la zone d'emboîtement entre socle (14) et cloche (16).

3. L'article de la revendication 2, comprenant une pluralité desdits passages périphériques, régulièrement répartis dans la zone d'emboîtement entre socle (14) et cloche (16) et séparés par des régions (60) d'encliquetage de la cloche sur le socle.

4. L'article de la revendication 1, dans lequel ladite masse d'un produit de type fromager (12) est un fromage à croûte naturelle fleurie, morgée ou mixte avec présence de levures, moisissures, cultures de micro-organismes ou bactéries communément présents en fromagerie, ce fromage étant un fromage du groupe comprenant : les pâtes ferme, semi-dure, pressée ou non, cuite ou non avec croûte naturelle; les pâtes persillées à croûte fleurie, morgée, ou non ; et les pâtes molles à croûte naturelle fleurie et/ou morgée.

5. L'article de la revendication 1, dans lequel le produit de type fromager (12) est directement supporté par la face supérieure (18) du socle (14).

6. L'article de la revendication 1, dans lequel la coiffe (40) recouvre toute l'étendue de la face supérieure du produit.

7. L'article de la revendication 1, dans lequel la coiffe (40) recouvre la surface latérale périphérique du produit sur la hauteur de celui-ci située en vis-à-vis de la cloche.

8. L'article de la revendication 1, dans lequel la coiffe comporte une languette de préhension, apte à faciliter l'enlèvement et le retrait de la coiffe au moment de la première ouverture.

9. L'article de la revendication 1, dans lequel les dimensions transversales de la cloche (16) sont choisies, en fonction des dimensions correspondantes du produit et de la déformabilité de ce dernier, de manière à ne laisser subsister que peu ou pas d'espace libre (42) entre produit (12) et cloche: (16) dans la région périphérique latérale de l'emballage.

10. L'article de la revendication 1, dans lequel le produit de type fromager est du type à pâte molle et croûte fleurie, et la configuration intérieure de la face supérieure de la cloche est choisie de manière à plaquer la coiffe (40) contre la face supérieure du produit de type fromager (12) lorsque la cloche est mise en place sur le socle.

11. L'article de la revendication 1, dans lequel l'emballage comprend en outre :
u n manchon extérieur (44, 46, 48), notamment: un manchon thermoré-traitable, disposé à cheval sur la cloche (16) et sur le socle (14) et enserrant ensemble ces deux éléments, ce manchon étant en un matériau déchirable empêchant toute ouverture de l'emballage sans endommagement du manchon.

12. l'article de la revendication 1, dans lequel le socle comprend des nervures saillantes vers l'intérieur, formées sur la région en contact avec la sous-face du produit.

## Claims

1. A food item (10, comprising :
- a mass (12) of a cheese type product, and
- a closed packaging accommodating this product, comprising :
- a rigid base (14) supporting the product, and
- an external bell (16) which, together with the base, forms a closed volume containing the product, wherein the bell and the base comprise cooperating closing means (24, 28), and
- a cover (40) made of a material that is flexible and permeable to gases and water vapour, wherein the cover at least partially covers the free surface of the product in the interval between the latter and the inner surface of the bell, wherein said cover is adapted to regulate the gas exchanges between the cheese type product and its ambient atmosphere,
**characterized in that** the packaging furthermore comprises at least one ventilation opening (56, 58) formed at the interface between the base (14) and the bell (16) and adapted to put in free communication the gaseous volume inside the packaging with the ambient external atmosphere.

2. The item of claim 1, wherein the ventilation opening(s) is (are) constituted by a peripheral passageway (56, 58) that remains in place due to locally enlarged zones (50) of the base and/or the bell in the coupling zone between the base (14) and the bell (16).

3. The item of claim 2, comprising a plurality of said peripheral passageways that are regularly distributed in the coupling (14) between the base (14) and the bell (16) and separated by a snap-on region of the bell onto the base.

4. The item of claim 1, wherein said mass (12) of a cheese type product is a cheese with a natural surface mould, smear or mixes rind with presence of yeasts, moulds, micro-organism or bacterial cultures commonly present in the cheese making, said cheese being a cheese of the group comprising : hard, semi-firm, pressed or non-pressed, heated or non-heated cheese with a natural rind ; blue-veined cheese with a surface mould, smear rind or not ; and soft cheese with a natural surface mould and/or smear or not.

5. The item of claim 1, wherein the cheese type product (12) is directly supported by the upper side (18) of the base (14).

6. The item of claim 1, wherein the cover (40) covers the whole extent of the upper side of the product.

7. The item of claim 1, wherein the cover (40) covers the peripheral lateral surface of the product over its height located opposite to the bell.

8. The item of claim 1, wherein the cover comprises a gripping tab able to facilitate the removal and withdrawal of the cover at the moment of first opening.

9. The item of claim 1, wherein the transversal dimensions of the bell (16) are chosen as a function of the corresponding dimensions of the product and the deformability of the latter, such that there remains only little or no free space (42) between the product (12) and the bell (16) in the lateral peripheral region of the packaging.

10. The item of claim 1, wherein the cheese type product is of the soft cheese and surface mould rind type, and the internal configuration of the upper side of the bell is chosen such that the cover (40) is pressed against the upper side of the cheese type product (12) when the bell is place on the base.

11. The item of claim 1, wherein the packaging further comprises :
- an external sleeve (44, 46, 48), in particular a heat shrink sleeve, straddling the bell (16) and the base (14) and squeezing these two elements together, wherein said sleeve is made of a tearable material preventing any opening of the packaging without damage to the sleeve.

12. The item of claim 1, wherein the base comprises ribs protruding inwards, formed on the region in contact with the underside of the product.

## Patentansprüche

1. Nahrungsmittelartikel (10) mit :
- einer Masse (12) aus einem Produkt vom Käsetyp, und
- einer geschlossenen Verpackung, welche dieses Produkt aufnimmt, mit :
- einem steifen flachen Sockel (14), das das Produkt trägt, und
- einer äusseren Glocke (16), die mit dem Sockel ein geschlossenes Volumen bildet, wobei die Glocke und der Sockel zusammenwirkende Verschlussmittel (24, 28) umfassen, und
- einer Haube (40) aus einem flexiblen und für die Gase sowie Wasserdampf durchlässigen Material, wobei diese Haube zumindest teilweise die freie Oberfläche des Produkts im Intervall bedeckt, das zwischen dieser letzteren und der inneren Oberfläche der Glocke liegt, wobei diese Haube geeignet ist, die Gasaustausche zwischen dem Käseprodukt und der umgebenden Atmosphäre zu regulieren,
**dadurch gekennzeichnet, dass** die Verpackung zusätzlich wenigstens eine Belüftungsöffnung (56, 58) aufweist, die an der Grenzfläche zwischen dem Sockel (14) und der Haube (16) gebildet ist und geeignet ist, das innere Gasvolumen der Verpackung mit der äusseren, umgebenden Atmosphäre in freier Verbindung zu stellen.

2. Artikel nach Anspruch 1, bei welchem die Belüftungsöffnung(en) durch einen peripheren Durchgang (56, 58) ist (sind), die wegen örtlich erweiterten Teile (50) des Sockels und/oder der Glocke in der Verbindungszone zwischen dem Sockel (14) und der Glocke (16) noch besteht.

3. Artikel nach Anspruch 2, umfassend eine Pluralität von genannten peripheren Durchgänge, die regelmässig in der Verbindungszone zwischen dem Sockel (14) und der Glocke (16) verteilt sind und die durch Bereiche (60) zum Einklinken der Glocke auf den Sockel getrennt sind.

4. Artikel nach Anspruch 1, bei welchem die Masse aus einem Produkt vom Käsetyp (12) ein Käse mit einer natürlichen Oberflächenschimmel-, Schmiere- oder Misch-Rinde ist, unter Anwesenheit von Hefen, Schimmelpilzen, Mikroorganismus- oder Bakterienkulturen, die gewöhnlicherweise bei der Käseherstellung vorkommen, die folgendes umfasst : Hartkäse, halbfesten Käse, gepressten oder nicht gepressten Käse, gekochten oder nicht gekochten käse mit natürlichen Rinde ; Läse mit interner Schimmelbildung bzw. Blauschimmelkäse mit Oberflächenschimmel-, Schmiere-Rinde oder nicht ; und Weichkäse mit natürlicher Oberflächenschimmel- und/oder Schmiererinde.

5. Artikel nach Anspruch 1, bei welchem das Produkt vom Käsetyp (12) unmittelbar von der Oberseite (18) des Sockels (14) unterstützt ist.

6. Artikel nach Anspruch 1, bei welchem die Haube (40) die gesamte Ausdehnung der Oberseite des Produkts bedeckt.

7. Artikel nach Anspruch 1, bei welchem die Haube (40) die seitliche periphere Oberfläche des Produkts über dessen gegenüber der Glocke liegenden Höhe bedeckt.

8. Artikel nach Anspruch 1, bei welchem die Haube eine Greiflasche umfasst, die dazu geeignet ist, das Entfernen und Abnehmen der Haube zum Zeitpunkt des ersten Öffnens zu erleichtern.

9. Artikel nach Anspruch 1, bei welchem die Querabmessungen der Glocke (16) in Abhängigkeit der entsprechenden Abmessungen des Produkts und dessen Verformbarkeit gewählt ist, um so im seitlichen peripheren Bereich der Verpackung nur wenig oder keinen Freiraum (42) zwischen dem Produkt und der Glocke (16) zu lassen.

10. Artikel nach Anspruch 1, bei welchem das Produkt vom Käsetyp vom Typ Weichkäse und Oberflächenschimmel-Rinde ist, und die Innenkonfiguration der Oberseite der Glocke derart gewählt ist, dass die Haube (40) gegen die Oberseite des Produkts vom Käsetyp (12) gedrückt wird, wenn die Glocke auf dem Sockel platziert wird.

11. Artikel nach Anspruch 1, bei welchem die Verpackung ausserdem folgendes umfasst, :
- eine äussere Hülse (44, 46, 48), insbesondere eine Wärmeschrumfphülse, die zwischen der Glocke (16) und dem Sockel (14) aufgeteilt angeordnet ist und diese beiden Elemente gemeinsam einzwängt, wobei diese Hülse aus einem zerreissbaren Material ist, das jegliches Öffnen der Verpackung ohne Beschädigung der Hülse verhindert.

12. Artikel nach Anspruch 1, bei welchem der Sockel nach innen vorstehende Rippen umfasst, die in dem Bereich ausgebildet ist, der sich mit der Unterseite des Produkts in Kontakt befindet.
